# EUROPÄISCHE PATENTSCHRIFT

(11) **EP 1 858 689 B1**
(45) Veröffentlichungstag und Bekanntmachung des Hinweises auf die Patenterteilung: **02.03.2016**
(21) Anmeldenummer: 05821553.4
(22) Anmeldetag: 23.12.2005
(51) Int. Cl.: B29C 49/42, B29C 33/26, B29C 49/12, B29C 49/36, B29C 49/64, B29K 67/00, B29K 23/00

(54) **VORRICHTUNG ZUR BLASFORMUNG VON BEHÄLTERN**
DEVICE FOR THE BLOW-MOULDING OF CONTAINERS
DISPOSITIF DE MOULAGE PAR SOUFFLAGE DE RECIPIENTS

(30) Priorität: 15.03.2005 DE 102005011805
(43) Veröffentlichungstag der Anmeldung: 28.11.2007
(73) Patentinhaber: KHS Corpoplast GmbH, 22145 Hamburg (DE)
(72) Erfinder: BAUMGARTE, Rolf, 22926 Ahrenburg (DE); LITZENBERG, Michael, 21502 Geesthacht (DE); LINKE, Michael, 22926 Ahrensburg (DE)
(74) Vertreter: Hausfeld, Norbert
(86) Internationale Anmeldenummer: PCT/DE2005/002313
(87) Internationale Veröffentlichungsnummer: WO 2006/097056

(56) Entgegenhaltungen:
- WO-A-2004/046676
- FR-A- 2 720 681
- US-A- 4 082 175
- US-A- 4 086 999
- US-A- 4 770 456
- US-A- 5 282 888
- US-A- 5 542 526
- US-B1- 6 471 038

## Beschreibung

Die Erfindung betrifft eine Vorrichtung zur Blasformung von Behältern, die eine Heizstrecke zur Erwärmung von Vorformlingen aus einem thermoplastischen Material aufweist und die mit einer Blaseinrichtung versehen ist, die mindestens eine Blasstation zur Umformung der Vorformlinge in die Behälter aufweist, sowie bei der ein Tragelement zum Transport der Vorformlinge im Bereich eines in einen Mündungsabschnitt des Vorformlings einführbaren Kopfes mindestens ein spreizbares Klemmelement aufweist

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bekannt ist die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Klemmdornen, die zur Halterung in einen Mündungsbereich des Vorformlings einführbar sind, gehören ebenfalls zu den verfügbaren Konstruktionen.

Eine Handhabung von Behältern und Vorformlingen unter Verwendung von Übergaberädern wird beispielsweise in der DE-OS 199 06 438 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die für einen Transport der Vorformlinge verwendeten Transportdorne können noch nicht allen Anforderungen gerecht werden, die an einen sicheren Transport der Vorformlinge mit hoher Transportgeschwindigkeit gestellt werden. Insbesondere die Transportdorne, die in einen Mündungsbereich der Vorformlinge eingeführt werden, besitzen noch eine Reihe von Mängeln. Die bekannten Klemmdorne sind in der Regel aus einem harten Kern ausgebildet, auf den außenseitig ein O-Ring aus einem Elastomer aufgesteckt ist. Bei einem Einführen des Klemmdornes in den Mündungsbereich des Vorformlings hinein wird der O-Ring elastisch verformt und führt zu einer Fixierung des Vorformlings am Klemmdorn.

Eine derartige Halterung der Vorformlinge erweist sich bei zunehmender Betriebsdauer als unzuverlässig. Zum einen unterliegen die Innendurchmesser der Vorformlinge Fertigungstoleranzen, die zu unterschiedlichen Klemmkräften führen. Darüber hinaus verändert sich die Elastizität und somit die erzeugte federnde Kraft des elastomeren Materials mit zunehmender Alterung sowie in Abhängigkeit von der jeweils herrschenden Temperatur. Es ist auch nicht möglich, vorsorglich eine zu große Spannung auf den Mündungsbereich aufzubringen, da eine derartig große Spannung zu Verformungen des Mündungsbereiches führen würde. Aufgrund dieser Eigenschaften der elastomeren Materialien ist damit zu rechnen, daß eine mehr oder weniger große Anzahl von Vorformlingen von den Klemmdornen herunterfällt und nicht für eine nachfolgende Blasverformung zur Verfügung steht.

In der US 4,082,175 A wird bereits die Verwendung eines steuerbaren Klemmelementes zur Halterung von Vorformlingen beschrieben. Das Klemmelement ist ringartig ausgebildet und wird zur Halterung des Vorformlings zwischen einem Spannelement und einem Andrückelement eingequetscht. Das Spannelement ist über eine Kurvensteuerung positionierbar. Das Spannelement und das Andrückelement weisen einander zugewandt angeordnete schräge Leitflächen für das Klemmelement auf, die über eine Einspannung des Klemmelementes zu einer radialen Aufweitung des Klemmelementes führen und hierdurch die Klemmkräfte generieren.

In der US 6,471,038 B1 wird ein Klemmelement für die Vorformlinge beschrieben, bei der eine elastomere Hülse durch ein Hineinziehen eines Spannelementes in einer radialen Richtung aufgeweitet wird und hierdurch eine Klemmung des Vorformlings verursacht.

Die US 5,542,526 A zeigt ein Klemmelement, das ebenfalls als eine in einer radialen Richtung expandierende Hülse ausgebildet ist.

Die US 4,086,999 A offenbart eine Vorrichtung gemäß dem Oberbegriff des Anspruchs 1 und zeigt ein Klemmelement, das durch axiale Kompression in seinem radialen Durchmesser aufgeweitet wird und hierdurch Klemmkräfte generiert. Die axiale Kompression erfolgt dabei durch ein axial bewegliches Spannelement, das kurvengesteuert relativ zu einem Andrückelement in axialer Richtung bewegt wird.

Aufgabe der vorliegenden Erfindung ist es, eine Vorrichtung der einleitend genannten Art derart zu konstruieren, daß ein zuverlässiger Transport der Vorformlinge bei hoher Transportgeschwindigkeit unterstützt wird.

Diese Aufgabe wird erfindungsgemäß dadurch gelöst, daß das Klemmelement mindestens bereichsweise als ein Hohlprofil und im wesentlichen rotationssymmetrisch zu einer Längsachse ausgebildet ist und aus zwei in Richtung der Längsachse hintereinander angeordneten U-Profilen besteht, wobei die jeweiligen U-Schenkel in Richtung auf die Längsachse angeordnet sind.

Durch das lose Hineinführen des Tragelementes in den Mündungsabschnitt des Vorformlings werden Reibeffekte während des Einführens, die zu einem Materialabrieb führen können, vermieden. Nach einem Erreichen der Endpositionierung des Tragelementes innerhalb des Mündungsabschnittes erfolgt ein aktives Verspannen und somit eine sichere Halterung des Vorformlings. Nach einer vorgesehenen Positionierung des Vorformlings wird die Verspannung zwischen dem Tragelement und dem Mündungsabschnitt wieder aufgehoben und das Tragelement kann ohne Reibkontakt mit dem Vorformling aus dem Mündungsabschnitt herausgezogen werden. Eine schonende und zugleich zuverlässige Materialhandhabung wird dabei dadurch unterstützt, daß das Klemmelement mindestens bereichsweise als ein Hohlprofil ausgebildet ist. Dadurch, dass das Hohlprofil aus zwei in Richtung der Längsachse hintereinander angeordneten U-Profilen besteht, wobei die jeweiligen U-Schenkel in Richtung auf die Längsachse angeordnet sind, wird erreicht, dass mit einer vergleichsweise geringen Stellkraft die Bereitstellung einer zuverlässigen Klemmung erfolgt, wobei durch die Eigenelastizität des Klemmelementes zu große Klemmkräfte vermieden werden.

Ein Transport der Vorformlinge ohne Durchführung von Wendevorgängen wird dadurch unterstützt, daß die Vorformlinge mindestens entlang eines Teiles ihres Transportweges vom Tragelement mit ihren Mündungsabschnitten in lotrechter Richtung nach oben orientiert transportiert werden.

Gemäß einer Ausführungsvariante ist vorgesehen, daß die Verspannung zwischen dem Tragelement und dem Vorformling durch eine am Tragelement angreifende Zugkraft vorgegeben wird.

Ebenfalls ist daran gedacht, daß die Verspannung zwischen dem Tragelement und dem Vorformling durch eine am Tragelement angreifende Druckkraft vorgegeben wird.

Eine zuverlässige Halterung der Vorformlinge kann dadurch erfolgen, daß das Tragelement den Vorformling in einem Grundzustand haltert und nur durch eine aktive Stellkraft eine Freigabe des Vorformlings hervorgerufen wird.

Gemäß einer weiteren Ausführungsvariante ist es auch möglich, daß eine Fixierung des Vorformlings vom Tragelement durch eine aktive Stellkraft hervorgerufen wird.

Eine dauerhaft zuverlässige und zugleich preiswerte Ausführungsform wird dadurch bereitgestellt, daß der Vorformling von einem elastomeren Teil des Tragelementes mit einer Spannkraft beaufschlagt wird.

Eine hohe Reproduktionsgenauigkeit wird dadurch unter-stützt, daß eine Halterung und Freigabe des Vorformlings über eine das Tragelement beaufschlagende Kurvensteuerung vorgegeben wird.

Eine typische Anwendung besteht darin, daß die Vorformlinge vom Tragelement mindestens entlang eines Teiles einer Heizstrecke transportiert werden.

Geringe mechanische Belastungen bei gleichzeitig hoher Zuverlässigkeit können dadurch erreicht werden, daß vom Tragelement eine in einer Längsrichtung des Tragelementes wirkende Stellkraft in eine im Vergleich zur Stellkraft größere und die Vorformlinge halternde Querkraft transformiert wird.

Eine kompakte und robuste Ausführungsform wird dadurch bereitgestellt, daß das Tragelement ein hülsenförmiges Basiselement und ein im Basiselement geführtes und den Kopf tragendes Positionierelement aufweist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Prinzipskizze einer Blasmaschine, bei der die Vorformlinge sowohl im Bereich einer Zuführung als auch im Bereich der Heizstrecke sowie des Blas-rades mit ihren Mündungen in lotrechter Richtung nach oben transportiert werden und bei der die Heizstrecke unmittelbar mit dem Blasrad gekoppelt ist,
- Fig. 6: eine Seitenansicht eines Vorformlings, in den ein aktiv verspannbares Tragelement eingeführt ist und
- Fig. 7: einen Längsschnitt durch die Anordnung gemäß Fig. 6.

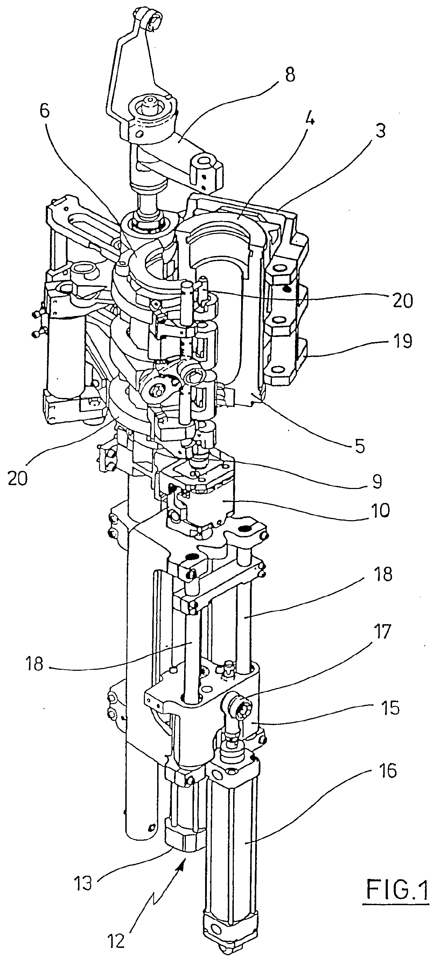

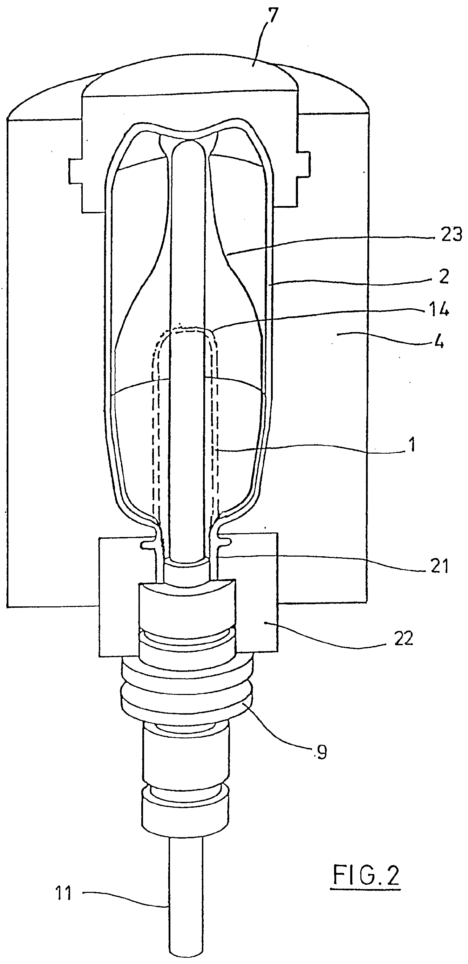

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im wesentlichen aus einer Blasstation (3), die mit einer Blas-form (4) versehen ist, in die ein Vorformling (1) einsetz-bar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positio-nierbar ist. Der Vorformling (1) kann im Bereich der Blas-station (3) von einem Halteelement (9) fixiert sein. Es ist beispielsweise möglich, den Vorformling (1) über Zangen oder andere Handhabungsmittel direkt in die Blasform (4) einzusetzen.

Zur Ermöglichung einer Druckluftzuleitung ist unterhalb der Blasform (4) ein Anschlußkolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druck-luftzuleitungen zu verwenden.

Eine Reckung des Vorformlings (1) erfolgt bei diesem Aus-führungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurven-segmenten ist insbesondere dann zweckmäßig, wenn eine Mehr-zahl von Blasstationen (3) auf einem rotierenden Blasrad (25) angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung posi-tioniert. Insbesondere ist daran gedacht, den Sekundär-zylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

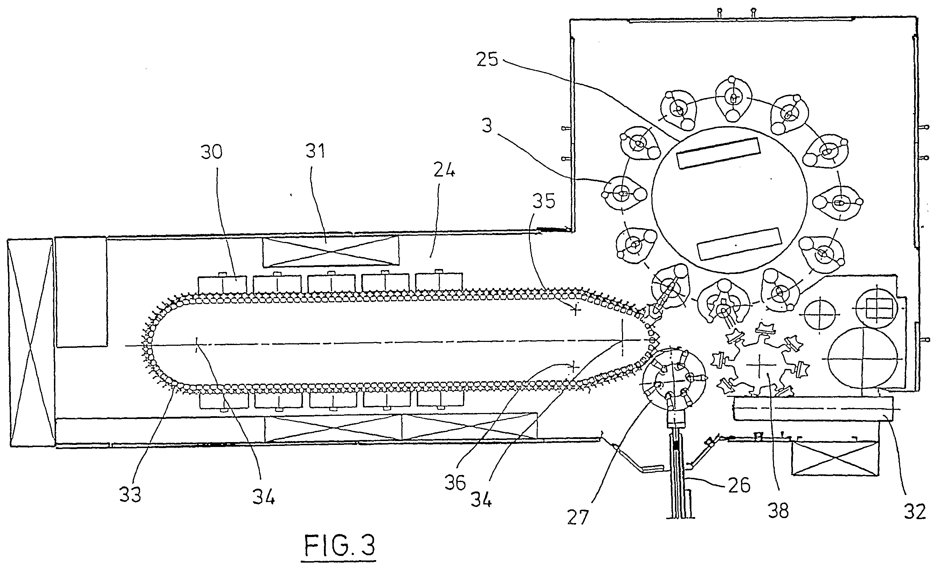

Fig. 3 zeigt den grundsätzlichen Aufbau einer Blasmaschine, die mit einer Heizstrecke (24) sowie einem rotierenden Blasrad (25) versehen ist. Ausgehend von einer Vorform-lingseingabe (26) werden die Vorformlinge (1) von einem Übergaberad (27) in den Bereich der Heizstrecke (24) transportiert. Entlang der Heizstrecke (24) sind Heiz-strahler (30) sowie Gebläse (31) angeordnet, um die Vor-formlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von einem weiteren Übergaberad (38) einer Aus-gabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimen-sionierungsvorschriften erzielt werden.

Als thermoplastisches Material können unterschiedliche Kunststoffe verwendet werden. Einsatzfähig sind beispiels-weise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druck-niveau zugeführt wird und in eine sich anschließende Haupt-blasphase unterteilt, in der Gas mit einem höheren Druck-niveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Um-lenkrädern (34) geführt sind. Insbesondere ist daran ge-dacht, durch die kettenartige Anordnung eine im wesent-lichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benach-barten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zuein-ander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heiz-strecke (24) und das größere Umlenkrad (34) im unmittel-baren Übergabebereich zum Übergaberad (27) und zum Blasrad (25). Alternativ zur Verwendung von kettenartigen Trans-portelementen (33) ist es beispielsweise auch möglich, ein rotierendes Heizrad zu verwenden.

Nach einem fertigen Blasen der Behälter (2) werden diese vom Übergaberad (38) aus dem Bereich der Blasstationen (3) herausgeführt und zur Ausgabestrecke (32) transportiert.

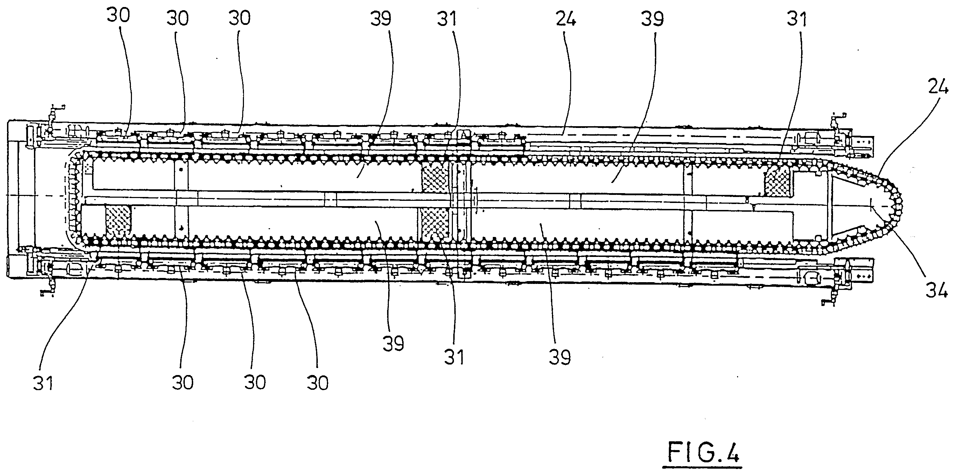

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zuge-ordneten Heizstrahlern (30) jeweils gegenüberliegen und über Ausströmöffnungen die Kühlluft abgeben. Durch die Anordnung der Ausströmrichtungen wird eine Strömungs-richtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der Vorformling den gesamten Bereich der Blasmaschine ohne Durchführung von Wendevorgängen mit seiner Mündung in lotrechter Richtung nach oben orientiert.

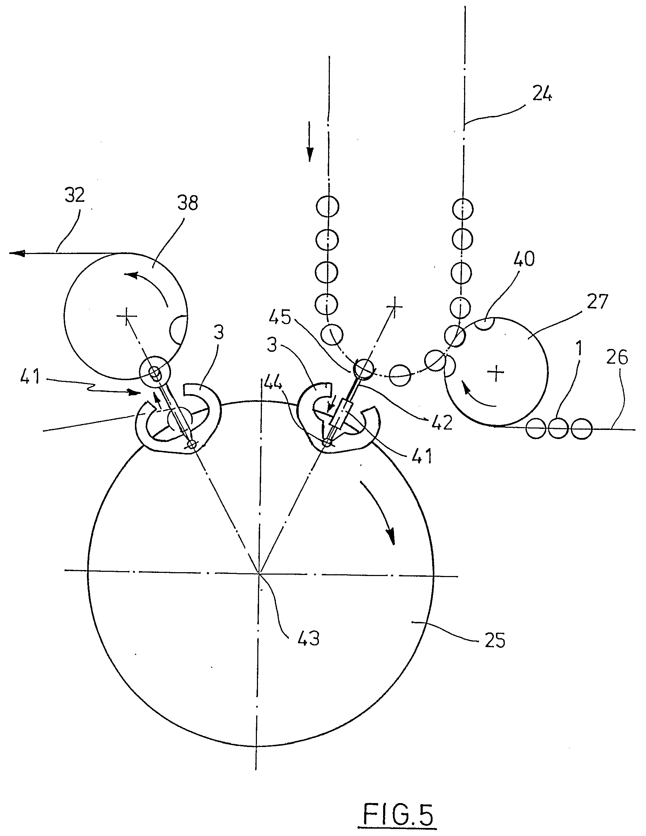

Ein Ausführungsbeispiel, bei der ein entsprechender Durchlauf des Vorformlings (1) durch die gesamte Blasmaschine mit seiner Mündung in lotrechter Richtung nach oben orientiert vorgesehen ist, ist in Fig. 5 dargestellt.

Die Vorformlinge (1) werden hierbei zunächst entlang der Vorformlingseingabe (26) zum Übergaberad (27) geführt, das entweder mit rotierenden und steuerbaren Ausgabearmen ausgestattet sein kann, oder entsprechend der in Fig. 5 dargestellten vereinfachten Ausführung lediglich im Bereich seines Außenumfanges mit Ausnehmungen versehen ist, in die die Vorformlinge (1) einsetzbar sind. Das Übergaberad (27) führt hierbei eine Vereinzelung der Vorformlinge (1) und die Übergabe an die Heizstrecke (24) durch.

Bei einem Durchlaufen der Heizstrecke (24) werden die beheizten Vorformlinge (1) von einer Übergabeeinrichtung (41) direkt von der Heizstrecke (24) zum Blasrad (25) transportiert. Die direkte Übergabe der Vorformlinge (1) an das Blasrad (25) erfolgt ohne Verwendung eines konventionellen rotierenden separaten Übergaberades. Bei der in Fig. 5 dargestellten Ausführungsform ist jede der Blasstationen (3) mit einer eigenen Übergabeeinrichtung (41) versehen. Die Übergabeeinrichtung (41) ist hierbei als ein teleskopierbarer und verschwenkbarer Tragarm (42) ausgebildet. Der Tragarm (42) ist im Bereich seiner einem Zentrum (43) des Blasrades (25) zugewandten Ausdehnung von einem Schwenkgelenk (44) drehbeweglich gelagert. Im Bereich seiner der Heizstrecke (24) zugewandten Ausdehnung weist der Tragarm (42) eine Haltezange (45) auf.

Zur Durchführung einer geeigneten Übergabebewegung ist der Tragarm (42) mit einer Kurvensteuerung gekoppelt, die zu einem Übergabezeitpunkt der Vorformlinge (1) von der Heizstrecke (24) zur Übergabeeinrichtung (41) für geeignete Relativbewegungen und Relativgeschwindigkeiten zwischen der Haltezange (45) und dem zu übergebenden Vorformling (1) sorgt. Aufgrund der relativ großen Drehgeschwindigkeit des Blasrades (25) wird der Tragarm (42) bei der Durchführung eines Übergabevorganges zunächst entgegen der Bewegungsrichtung des Blasrades (25) zurückgeschwenkt, um die Geschwindigkeit der Haltezange (45) zu vermindern. Nach einer Durchführung des Übergabevorganges wird der Tragarm (42) in Bewegungsrichtung des Blasrades (25) in seine Ausgangsposition zurückgeschwenkt.

Ein zum eben beschriebenen Übergabevorgang entgegengesetzter Übergabevorgang erfolgt nach einer vollständigen Umformung des Vorformlings (1) in den Behälter (2), um eine Übergabe zum Übergaberad (38) durchzuführen. Während des gesamten Durchlaufes von der Vorformlingseingabe (26) bis zum Ausgabestrecke (32) wird der Vorformling (1) bzw. der Behälter (2) mit seiner Mündung in lotrechter Richtung nach oben orientiert und somit ohne die Durchführung von Schwenkvorgängen transportiert. Gemäß dem Stand der Technik verwendete Schwenkeinrichtungen werden hierdurch vermieden.

Alternativ zu der in Fig. 5 dargestellten Ausführungsform, bei der die Übergabeeinrichtungen (41) jeweils den Blasstationen (3) zugeordnet sind, ist es ebenfalls denkbar, im Übergangsbereich von der Heizstrecke (24) zum Blasrad (25) sowie im Übergangsbereich vom Blasrad (25) zum Übergaberad (38) stationäre Übergabeeinrichtungen (41) anzuordnen. Auch hier können die Übergabeeinrichtungen (41) im wesentlichen als Tragarme (42) mit der vorstehend beschriebenen Ausbildung konstruiert werden. Es wird hierdurch die Anzahl der erforderlichen Übergabeeinrichtungen (41) vermindert, es sind andererseits aber schnellere Bewegungsabläufe erforderlich.

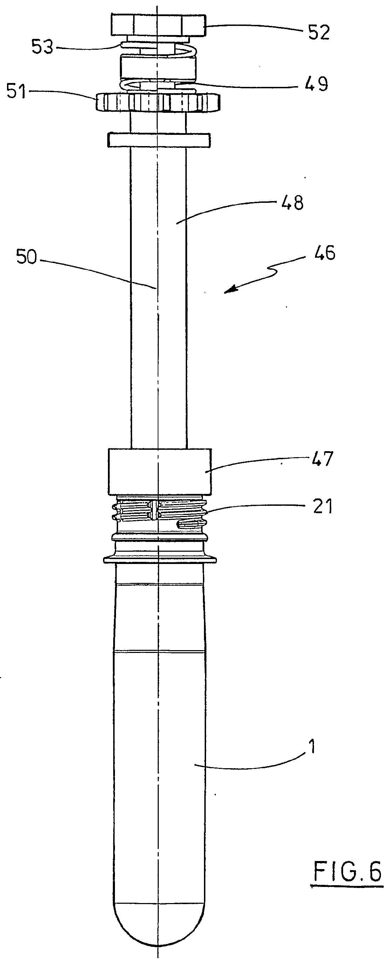

Fig. 6 zeigt eine Seitenansicht eines Vorformlings (1), in dessen Mündungsabschnitt (21) bereichsweise ein Tragelement (46) eingeführt ist. Das Tragelement (46) weist im Bereich seines dem Vorformling (1) zugewandten Endes ein Andruckelement (47) auf, das an einem hülsenförmigen Basiselement (48) befestigt ist. Innerhalb des Basiselementes (48) ist ein Positionierelement (49) geführt, das in Richtung einer Längsachse (50) relativ zum Basiselement (48) beweglich ist. Im Bereich seiner dem Vorformling abgewandten Ausdehnung haltert das Basiselement (48) ein Abschlußelement (51), das beim Ausführungsbeispiel gemäß Fig. 6 als ein Zahnrad ausgebildet ist. Gegenüber dem Abschlußelement (51) stützt sich ein Begrenzungselement (52) des Positionierelementes (49) über eine Feder (53) ab. Die Feder (53) ist als eine Zugfeder ausgebildet und ermöglicht eine Verschiebung des Positionierelementes (49) innerhalb des Basiselementes (48) in Richtung auf den Vorformling (1). Nach einer Beendigung einer ziehenden Kraftbeaufschlagung des Positionierelementes (49) wird dieses von der Feder (53) in eine Grundpositionierung zurückgeführt.

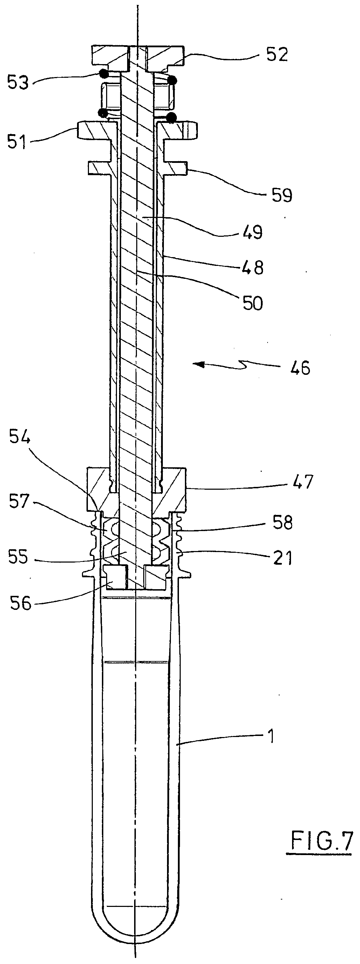

Fig. 7 zeigt einen Längsschnitt durch die Anordnung gemäß Fig. 6. Es ist zu erkennen, daß der Mündungsabschnitt (21) mit einer oberen Begrenzung (54) gegen das Andrückelement (47) geführt ist. Das Positionierelement (49) greift mit einem Kopf (55) in den Mündungsabschnitt (21) ein. Der Kopf (55) besteht im wesentlichen aus einem Spannelement (56) sowie einem zwischen dem Spannelement (56) und dem Andrückelement (47) angeordneten Klemmelement (57). Das Klemmelement (57) kann aus einem elastomeren Material ausgebildet sein.

Bei der in Fig. 7 dargestellten Einführpositionierung ist die Feder (53) weitgehend entspannt und zwischen dem Klemmelement (57) und einer inneren Begrenzung des Mündungsabschnittes (21) erstreckt sich ein Spalt (58). Das Positionierelement (49) ist in diesem Zustand reibungsfrei bzw. zumindest reibungsarm in den Mündungsabschnitt (21) einführbar. Zur Durchführung einer Verspannung des Klemmelementes (57) relativ zum Vorformling (1) wird das Positionierelement (49) ein Stück aus dem Basiselement (48) in eine dem Vorformling (1) abgewandte Richtung herausgezogen. Das Klemmelement (57) wird hierdurch zwischen dem Andrückelement (47) und dem Spannelement (56) verformt und in Richtung auf die Innenwand des Vorformlings (1) nach außen gedrückt. Hierdurch erfolgt ein Spreizen des Klemmelementes (57) und eine entsprechende Fixierung des Vorformlings (1).

Beim dargestellten Ausführungsbeispiel ist das Klemmelement (57) im wesentlichen rotationssymmetrisch zur Längsachse (50) ausgebildet und besteht aus zwei in Richtung der Längsachse (50) hintereinander angeordneten U-Profilen, wobei die jeweiligen U-Schenkel in Richtung auf das Positionierelement (49) angeordnet sind. Die beiden U-Schenkel können einteilig oder als separate Bauelemente ausgebildet sein. Alternativ zur Verwendung von U-Profilen oder andersartigen Profilen ist auch die Verwendung von Vollmaterial möglich. Im einfachsten Fall wird ein O-Ring verwendet. Das in Fig. 7 veranschaulichte Profil ermöglicht jedoch mit einer vergleichsweise geringen Stellkraft die Bereitstellung einer zuverlässigen Klemmung, wobei durch die Eigenelastizität des Klemmelementes (57) zu große Klemmkräfte vermieden werden.

Ein Transport des Tragelementes (46) entlang eines Teiles der Blasmaschine, insbesondere entlang der Heizstrecke (24), kann beispielsweise unter Verwendung von Führungsschienen erfolgen, die zwischen dem Abschlußelement (51) und einem Querstes (59) eingreifen. Unter Verwendung des mit der Verzahnung versehenen Abschlußelementes (51) kann eine Rotationsbewegung des Tragelementes (46) um die Längsachse (50) herum hervorgerufen werden.

Zur Durchführung einer Positionierbewegung des Positionierelementes (49) relativ zum Basiselement (48) kann eine Kurvensteuerung verwendet werden. Die Kurvensteuerung kann dabei beispielsweise das Begrenzungselement (52) entgegen der Kraft (53) aus dem Basiselement (48) herausziehen, so daß das Tragelement (46) nach einer Freigabe durch die Kurvensteuerung wieder in die in Fig. 7 dargestellte Grundpositionierung zurückkehrt.

Gemäß einer weiteren Ausführungsform ist es auch möglich, die Feder (53) als eine Druckfeder auszubilden, die in einer Grundpositionierung das Klemmelement (57) zwischen dem Spannelement (56) und dem Andrückelement (47) verformt. Es würde somit im Grundzustand eine Halterung des Vorformlings (1) erfolgen und nur bei einer aktiven Betätigung, beispielsweise durch eine Kurvensteuerung, erfolgt eine Freigabe des Vorformlings (1) durch eine Entspannung des Klemmelementes (57). Die konkrete technische Realisierung kann anwendungsabhängig vorgegeben werden. Die Verwendung der Druckfeder besitzt den Vorteil, daß der Vorformling bei einem Wegfall der externen Steuerkraft nicht verloren werden kann.

## Patentansprüche

1. Vorrichtung zur Blasformung von Behältern (2), die eine Heizstrecke (24) zur Erwärmung von Vorformlingen (1) aus einem thermoplastischen Material aufweist und die mit einer Blaseinrichtung versehen ist, die mindestens eine Blasstation (3) zur Umformung der Vorformlinge (1) in die Behälter (2) aufweist, sowie bei dem ein Tragelement (46) zum Transport der Vorformlinge (1) im Bereich eines in einen Mündungsabschnitt (21) des Vorformlings (1) einführbaren Kopfes (55) mindestens ein spreizbares Klemmelement (57) aufweist, **dadurch gekennzeichnet, daß** das Klemmelement (57) mindestens bereichsweise als ein Hohlprofil und im wesentlichen rotationssymmetrisch zu einer Längsachse (50) ausgebildet ist und aus zwei in Richtung der Längsachse (50) hintereinander angeordneten U-Profilen besteht, wobei die jeweiligen U-Schenkel in Richtung auf die Längsachse (50) angeordnet sind.

2. Vorrichtung nach Anspruch 1, **dadurch gekennzeichnet, daß** das Tragelement (46) zur Halterung eines mit seinem Mündungsabschnitt (21) in lotrechter Richtung nach oben ausgerichteten Vorformlings (1) ausgebildet ist.

3. Vorrichtung nach Anspruch 1 oder 2, **dadurch gekennzeichnet, daß** das Klemmelement (57) durch eine in Richtung einer Längsachse (50) des Tragelementes (46) wirkende Zugkraft spreizbar ist.

4. Vorrichtung nach Anspruch 1 oder 2, **dadurch gekennzeichnet, daß** das Klemmelement (57) durch eine in Richtung einer Längsachse (50) des Tragelementes (46) wirkende Druckkraft spreizbar ist.

5. Vorrichtung nach einem der Ansprüche 1 bis 4, **dadurch gekennzeichnet, daß** das Tragelement (46) mindestens eine Feder (53) aufweist, die ohne Einwirkung einer Stellkraft das Klemmelement (57) relativ zum Vorformling (1) verspannt.

6. Vorrichtung nach einem der Ansprüche 1 bis 4, **dadurch gekennzeichnet, daß** das Tragelement (46) eine Feder (53) aufweist, die das Klemmelement (57) in einem Grundzustand in einer entspannten Positionierung anordnet.

7. Vorrichtung nach einem der Ansprüche 1 bis 6, **dadurch gekennzeichnet, daß** das Klemmelement (57) aus einem Elastomer ausgebildet ist.

8. Vorrichtung nach einem der Ansprüche 1 bis 7, **dadurch gekennzeichnet, daß** zur Einbringung einer Stellkraft in das Tragelement (46) mindestens entlang eines Teiles eines vorgesehenen Transportweges eine Kurvensteuerung angeordnet ist.

9. Vorrichtung nach einem der Ansprüche 1 bis 8, **dadurch gekennzeichnet, daß** sich eine Transportstrecke des Tragelementes (46) mindestens entlang eines Teiles einer Heizstrecke (24) erstreckt.

10. Vorrichtung nach einem der Ansprüche 1 bis 9, **dadurch gekennzeichnet, daß** das Klemmelement (57) eine Gestaltung zur Transformation einer in Richtung der Längsachse (50) wirkenden Stellkraft in einer relativ zur Stellkraft größere den Vorformling (1) halternde Klemmkraft aufweist.

11. Vorrichtung nach einem der Ansprüche 1 bis 10, **dadurch gekennzeichnet, daß** das Tragelement (46) ein hülsenförmiges Basiselement (48) und ein im Basiselement (48) geführtes und den Kopf (55) tragendes Positionierelement (49) aufweist.

## Claims

1. A device for the blow moulding of containers (2), the device comprising a heating section (24) for heating preforms (1) that are made of thermoplastic material and the device being provided with a blowing device which comprises at least one blowing station (3) for moulding the preforms (1) to form the containers (2), wherein in said device a carrying element (46) intended to transport the preforms (1) comprises at least one expandable clamping element (57) in the vicinity of a head (55) that can be introduced into an outlet section (21) of the preform (1),
**characterised in that**
- at least in certain regions, the clamping element (57) is designed as a hollow profile and, in essence, in rotational symmetry with a longitudinal axis (50) and consists of two U-profiles that are arranged one after the other in the direction of the longitudinal axis (50), wherein the respective U-legs are arranged in a direction towards the longitudinal axis (50).

2. The device according to Claim 1, **characterised in that** the carrying element (46) is formed to hold a preform (1) that is aligned in vertical direction such that its outlet section (21) faces upwards.

3. The device according to Claim 1 or 2, **characterised in that** the clamping element (57) can be expanded by a tensile force acting in the direction of a longitudinal axis (50) of the carrying element (46).

4. The device according to Claim 1 or 2, **characterised in that** the clamping element (57) can be expanded by a compressive force acting in the direction of a longitudinal axis (50) of the carrying element (46).

5. The device according to any one of Claims 1 to 4, **characterised in that** the carrying element (46) comprises at least one spring (53) which braces the clamping element (57) in relation to the preform (1) without any action of an actuating force.

6. The device according to any one of Claims 1 to 4, **characterised in that** the carrying element (46) comprises a spring (53) which arranges the clamping element (57) in a stress-free position while it is in a basic condition.

7. The device according to any one of Claims 1 to 6, **characterised in that** the clamping element (57) is formed from an elastomer.

8. The device according to any one of Claims 1 to 7, **characterised in that**, to introduce an actuating force into the carrying element (46), a cam control is arranged at least along a part of a provided transport path.

9. The device according to any one of Claims 1 to 8, **characterised in that** a transport section of the carrying element (46) extends at least along a part of a heating section (24).

10. The device according to any one of Claims 1 to 9, **characterised in that** the clamping element (57) comprises a design for transforming an actuating force acting in the direction of the longitudinal axis (50) into a clamping force holding the preform (1), said clamping force being in excess of the actuating force.

11. The device according to any one of Claims 1 to 10, **characterised in that** the carrying element (46) comprises a sleeve-type basic element (48) and a positioning element (49) that is guided in the basic element (48) and carries the head (55).

## Revendications

1. Dispositif de moulage par soufflage de récipients (2) présentant une zone de chauffage (24) pour le réchauffement de préformes (1) en un matériau thermoplastique et muni d'un dispositif de soufflage présentant au moins une station de soufflage (3) pour la transformation des préformes (1) en récipients (2), et dont un élément porteur (46) assurant le transport des préformes (1) présente, au niveau d'une tête (55) pouvant être introduite dans une section d'embouchure (21) de la préforme (1), au moins un élément de blocage (57) pouvant être écarté, **caractérisé en ce que** l'élément de blocage (57) est, partiellement au moins, conformé en profil creux et présente essentiellement une symétrie de révolution par rapport à un axe longitudinal (50) et est composé de deux profilés en U agencés l'un derrière l'autre dans le sens de l'axe longitudinal (50), les branches en U respectives étant orientées vers l'axe longitudinal (50).

2. Dispositif selon la revendication 1, **caractérisé en ce que** l'élément porteur (46) est conformé en vue de maintenir une préforme (1) en position verticale avec sa section d'embouchure (21) orientée vers le haut.

3. Dispositif selon la revendication 1 ou 2, **caractérisé en ce que** l'élément de blocage (57) peut être écarté par une force de traction agissant dans le sens d'un axe longitudinal (50) de l'élément porteur (46).

4. Dispositif selon la revendication 1 ou 2, **caractérisé en ce que** l'élément de blocage (57) peut être écarté par une force de pression agissant dans le sens d'un axe longitudinal (50) de l'élément porteur (46).

5. Dispositif selon l'une des revendications 1 à 4, **caractérisé en ce que** l'élément porteur (46) présente au moins un ressort (53) qui, sans requérir l'action d'une force d'actionnement, presse l'élément de blocage (57) vers la préforme (1).

6. Dispositif selon l'une des revendications 1 à 4, **caractérisé en ce que** l'élément porteur (46) présente un ressort (53) qui place l'élément de blocage (57) en un état initial en position relâchée.

7. Dispositif selon l'une des revendications 1 à 6, **caractérisé en ce que** l'élément de blocage (57) est constitué en élastomère.

8. Dispositif selon l'une des revendications 1 à 7, **caractérisé en ce qu'**une commande à came est agencée le long d'au moins une partie d'un parcours prévu pour exercer une force d'actionnement sur l'élément porteur (46).

9. Dispositif selon l'une des revendications 1 à 8, **caractérisé en ce qu'**un parcours de transport de l'élément porteur (46) s'étend le long d'au moins une partie d'une zone de chauffage (24).

10. Dispositif selon l'une des revendications 1 à 9, **caractérisé en ce que** l'élément de blocage (57) est de conformation propre à transformer une force d'actionnement agissant dans le sens de l'axe longitudinal (50) en une force de serrage maintenant la préforme (1) et supérieure à la force d'actionnement.

11. Dispositif selon l'une des revendications 1 à 10, **caractérisé en ce que** l'élément porteur (46) présente un élément de base (48) en forme de manchon et un élément de positionnement (49) portant la tête (55) et guidé dans l'élément de base (48).
